(19) Europäisches Patentamt
European Patent Office
Office européen des brevets

(11) **EP 2 950 557 A1**

(12) # EUROPEAN PATENT APPLICATION

(43) Date of publication:
**02.12.2015 Bulletin 2015/49**

(51) Int Cl.:
***H04W 4/00*** *(2009.01)*

(21) Application number: **14305792.5**

(22) Date of filing: **27.05.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**92100 Boulogne-Billancourt (FR)**

(72) Inventors:
• **Saur, Stephan**
**70435 Stuttgart (DE)**
• **Fonseca dos Santos, André**
**70435 Stuttgart (DE)**

(74) Representative: **2SPL Patentanwälte PartG mbB**
**Postfach 15 17 23**
**80050 München (DE)**

(54) **Apparatuses, methods and computer programs for a base station transceiver and for a fixed machine device transceiver of a mobile communication system**

(57)     Embodiments provide apparatuses, methods and computer programs for a base station transceiver and for a fixed machine device transceiver of a mobile communication system. The apparatus 10 for the base station transceiver 100 of the mobile communication system 300 comprises a transceiver module 12 operable to communicate with a stationary fixed machine device transceiver 200 using a first or a second identity information related to an identity of the fixed machine device transceiver 200. A number of bits representing the first identity information differs from a number of bits representing the second identity information. The apparatus 10 further comprises a control module 14 operable to control the transceiver module 12. The control module 14 is further operable to determine the first or the second identity information for the fixed machine device transceiver 200 such that for a given point in time either the first or the second identity information is valid.

Fig. 1

EP 2 950 557 A1

**Description**

Embodiments described in the following relate to apparatuses, methods and computer programs for a base station transceiver and for a fixed machine device transceiver of a mobile communication system.

Background

This section introduces aspects that may be helpful in facilitating a better understanding of the invention(s). Accordingly, the statements of this section are to be read in this light and are not to be understood as admissions about what is in the prior art or what is not in the prior art.

Next-generation cellular wireless systems are often required to support not only classical User Equipments (UEs) for broadband applications like web browsing, but also devices for Machine Type Communications (MTC) like sensors and actuators, in the following referred to as Machine Devices (MD). The transmission volume of a MD may be very small, e.g. one message with 100 bits per day. But for other applications it is also possible that the transmission volume is quite big, e.g. 100 kbit per minute. Furthermore, it is considered that the number of MDs per radio cell may be one or two orders of magnitude higher than the number of UEs.

Summary

Some simplifications may be made in the following summary, which is intended to highlight and introduce some aspects of the various exemplary embodiments, but such simplifications are not intended to limit the scope of the inventions. Detailed descriptions of a preferred exemplary embodiment adequate to allow those of ordinary skill in the art to make and use the inventive concepts will follow in later sections.

Embodiments relate to apparatuses, methods and computer programs for a base station transceiver and for a fixed machine device transceiver of a mobile communication system. Thus, embodiments may improve a concept for data traffic reduction and efficiency in a machine-to-machine communication application involving a fixed machine device transceiver.

According to a first aspect embodiments relate to an apparatus for a base station transceiver of a mobile communication system. The apparatus comprises a transceiver module operable to communicate with a stationary fixed machine device transceiver using a first or a second identity information related to an identity of the fixed machine device transceiver. A number of bits representing the first identity information differs from a number of bits representing the second identity information. The apparatus further comprises a control module operable to control the transceiver module. The control module is further operable to determine the first or the second identity information for the fixed machine device transceiver such that for a given point in time either the first or the second identity information is valid. This may reduce data traffic or save radio resources for data transmitted from a base station to a machine device, and in consequence increase a signal-to-noise ratio by avoiding unnecessary communication.

In some embodiments the control module is further operable to determine the number of bits representing the first or the second identity information based on a transmission probability of the fixed machine device transceiver. Additionally or alternatively, the control module is further operable to determine the number of bits representing the first or the second identity information inversely proportional to the transmission probability of the fixed machine device transceiver. This may allow a dynamical adaptation of data overhead by decreasing a number of bits representing an identity information if a transmission probability increases for a given machine device.

In some embodiments the control module is operable to determine the first or the second identity information for the fixed machine device transceiver if a change in transmission probability of the fixed machine device transceiver over a predefined time interval exceeds a predetermined threshold. It may thus be possible to customize parameters triggering a determination of an identity information, which may for example lower statistical errors in a sample and may cause the sample to be more representative.

In some embodiments the control module is operable to send a previously received signal from the fixed machine device transceiver comprising the first or the second identity information to a traffic analysis entity. Therefore a sampling or evaluation of data traffic may be enabled internally or externally to a base station transceiver. Evaluation results may thus be made available locally for the base station transceiver or also for further base stations comprised by the network.

In some embodiments the control module is operable to determine the first or the second identity information for the fixed machine device transceiver in response to an update signal from a traffic analysis entity. This may enable coordinated updates of identity information or improve a concept for triggering an update.

In some embodiments the control module is operable to determine the first or the second identity information such that an intersection set of a first identity information set comprising the first identity information and a second identity information set comprising the second identity information is a null set. It may thus be possible to avoid ambiguities in data traffic or traffic evaluation after an update of identification information has been made.

In some embodiments the control module is operable to send an adaptation request signal to the fixed machine device using the transceiver module. The adaptation request signal comprises the first and the second identity information for the fixed machine device transceiver. Additionally or alternatively, the control module is operable to send the adaptation request signal repeatedly using the transceiver module if no confirmation signal from the fixed machine device transceiver is received within a predefined time period. An adaptation of identity information may be performed for several machine devices simultaneously this way.

In some embodiments the control module is operable to send a validity signal to the fixed machine device using the transceiver module, if a confirmation signal from the fixed machine device transceiver is received within a predefined time span. Thus, several machine devices may be simultaneously caused to use recently adapted identity information when communicating.

According to a further aspect embodiments relate to an apparatus for a fixed machine device transceiver of a mobile communication system. The apparatus comprises a transceiver module operable to communicate with a base station transceiver using a first or a second identity information related to an identity of the fixed machine device transceiver. A number of bits representing the first identity information differs from a number of bits representing the second identity information. The apparatus further comprises a control module operable to control the transceiver module. The control module is further operable to receive the first or the second identity information from the base station transceiver. The control module is also operable to activate either the first or the second identity information at a given point in time. This may reduce data traffic or save radio resources for data transmitted from a machine device to a base station, and in consequence increase a signal-to-noise ratio by avoiding unnecessary communication.

In some embodiments the control module is operable to activate the second identity information if an adaptation request signal from the base station transceiver comprising the first and the second identity information for the fixed machine device transceiver is received by the transceiver module. Additionally or alternatively, the first or the second identity information is biunique. This may adapt the amount of outgoing data traffic from the machine device according to a likelihood of transmission, avoid ambiguities or limit a chance of addressing multiple fixed machine device transceivers or errors in a data traffic analysis.

In some embodiments the control module is operable to send a confirmation signal to the base station transceiver using the transceiver module, if an adaptation request signal from the base station transceiver comprising the first and the second identity information for the fixed machine device transceiver is received by the transceiver module. This may be helpful to survey data reception during an identity information adaptation process

In some embodiments the control module is operable to communicate with a base station transceiver using the second identity information if a validity signal from the base station transceiver is received by the transceiver module or if a predefined time limit is exceeded.

This way, optional or alternative triggers may be provided for an adaptation to take effect.

According to a further embodiment it is provided a method for a base station transceiver of a mobile communication system. The method comprises communicating with a stationary fixed machine device transceiver using a first or a second identity information related to an identity of the fixed machine device transceiver. A number of bits representing the first identity information differs from a number of bits representing the second identity information. The method further comprises determining the first or the second identity information for the fixed machine device transceiver such that for a given point in time either the first or the second identity information is valid. This may offer an improved concept to reduce data overhead for data transmissions from a base station to a machine device and to avoid ambiguities during communication or errors during a data traffic evaluation. In consequence, a signal-to-noise ratio of a transmission may be improved.

According to yet a further embodiment it is provided a method for a fixed machine device transceiver of a mobile communication system. The method comprises communicating with a base station transceiver using a first or a second identity information related to an identity of the fixed machine device transceiver. A number of bits representing the first identity information differs from a number of bits representing the second identity information. The method further comprises receiving the first or the second identity information from the base station transceiver. Moreover, the method comprises activating either the first or the second identity information at a given point in time. This may offer an improved concept to reduce data overhead for data transmissions from a machine device to a base station and to avoid ambiguities during communication or errors during a data traffic evaluation. In consequence, a signal-to-noise ratio of a transmission may be improved.

Some embodiments comprise a computer readable storage medium storing instructions which, when executed by a computer, cause the computer to implement one of the methods described herein, or a digital control circuit installed within the apparatus for performing one of the methods. Such a digital control circuit, e.g. a digital signal processor (DSP), needs to be programmed accordingly. Hence, yet further embodiments also to a computer program or a computer program product having a program code for performing one of said methods, when the computer program or computer program product is executed on a computer, processor, or programmable hardware component.

Brief description of the Figures

Some embodiments of apparatuses and/or methods will be described in the following by way of example only, and with reference to the accompanying figures, in which

Fig. 1     shows a block diagram of an embodiment of an apparatus for a base station transceiver and an embodiment of an apparatus for a fixed machine device transceiver of a mobile communication system;

Fig. 2     shows an illustration of a network architecture according to an embodiment;

Fig. 3     shows a schematic illustration of an adaptation request signal and a confirmation signal according to an embodiment;

Fig. 4     shows a flow chart of a method for a base station transceiver of a mobile communication system according to an embodiment; and

Fig. 5     shows a flow chart of a method for a fixed machine device transceiver of a mobile communication system according to an embodiment.

Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

A single transmission of a MD may consist of an address part (in order to identify the individual device or a group of devices) and the actual data payload. The overall number of transmissions from MDs may be high, whereas the mean amount of information per transmission may be low, so the amount of bits that is spent for addresses may be a significant indicator for the performance of the communication system. Existing systems like LTE conventionally operate with addresses of constant length for all devices (UEs and MDs) regardless of the specific properties of the respective traffic. This may however lead to unsatisfactory performance if the number of MDs continuously increases. From information theoretical and practical point of view the existing addressing scheme may hence be inadequate.

According to a conventional addressing scheme, the length of the address of a device cannot be adapted to the frequency of transmissions from said device. This may lead to unnecessarily high data traffic because the overall number of bits to be spent for addressing may be undesirably big. This may become a severe problem as soon as a multitude of short messages are sent.

Furthermore, the address length may result in an increase of a packet length of many devices and consequently reduce an access capacity of a cell. In other words, the amount of MDs that the cell can support may thus be limited.

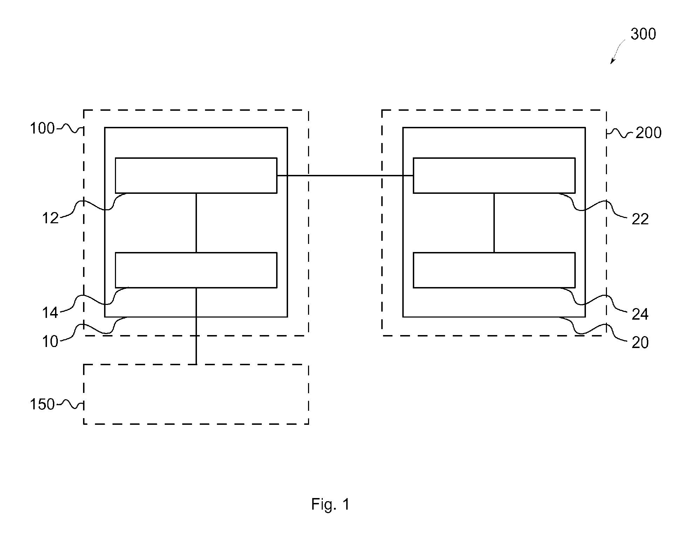

In the following, optional components are depicted in dashed lines. Fig. 1 illustrates a block diagram of an embodiment of an apparatus 10 for a base station transceiver 100 of a mobile communication system 300. Apparatus 10 comprises a transceiver module 12 operable to communicate with a stationary fixed machine device transceiver 200 using a first or a second identity information related to an identity of fixed machine device transceiver 200. A number of bits representing the first identity information differs from a number of bits representing the second identity information. Apparatus 10 further comprises a control module 14 operable to control transceiver module 12. Control module 14 is further operable to determine the first or the second identity information for the fixed machine device transceiver 200 such that for a given point in time either the first or the second identity information is valid. Control module 14 is further connected to transceiver module 12.

A fixed machine device may resemble for example a stationary sensor or an actuator. The term "fixed" implies a movability of a mobile machine device which is restricted to a coverage area of a single cell. In other words, the term "fixed machine device" may hence also comprise machine devices which may be moved within a coverage area of the single cell. Such machine devices may e.g. be implemented in movable objects in a factory hall or as e-Health devices in the fields of geriatric care or medical service.

In embodiments, control module 14 may be implemented using one or more processing units, one or more processing devices, any means for processing, such as a processor, a computer or a programmable hardware component being operable with accordingly adapted software. In other words, the described functions of control module 14 may as well be implemented in software, which is then executed on one or more programmable hardware components. Such hardware components may comprise a general purpose processor, a Digital Signal Processor (DSP), a micro-controller, etc.

Transceiver module 12 may be implemented as one or more receiver/transmitter/transceiver devices, one or more receiver/transmitter/transceiver units, any means for receiving/transmitting/transceiving, i.e. receiving and/or transmitting etc. A receiver/transmitter/transceiver or receiver/transmitter/transceiver module 12 may be any means for transceiving, i.e. receiving and/or transmitting etc., and it may comprise typical receiver and transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc.

Likewise, an apparatus 20 for a fixed machine device transceiver 200 of mobile communication system 300 is depicted in Fig. 1. Apparatus 20 comprises a transceiver module 22 operable to communicate with a base station transceiver 100 using a first or a second identity information related to an identity of fixed machine device transceiver 200. A number of bits representing the first identity information differs from a number of bits representing the second identity information. Apparatus 20 further comprises a control module 24 operable to control transceiver module 22. Control module 24 is further operable to receive the first or the second identity information from base station transceiver 100. Control module 24 is also operable to activate either the first or the second identity information at a given point in time. Control module 24 is further connected to transceiver module 22. Transceiver module 22 may be implemented accordingly with transceiver module 12. Likewise, control module 24 may be implemented accordingly with control module 14. Implementations may be adapted to the according application at a fixed machine device transceiver 200 or at a base station transceiver 100, respectively.

In general, the mobile communication system may, for example, correspond to one of the Third Generation Partnership Project (3GPP)-standardized mobile communication networks, where the term mobile communication system is used synonymously to mobile communication network. The mobile or wireless communication system may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, a laptop, a notebook, a personal computer, a Personal Digital Assistant (PDA), a Universal Serial Bus (USB) - stick, a car, etc. A mobile transceiver may also be referred to as User Equipment (UE) or mobile in line with the 3GPP terminology.

A base station transceiver may be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point etc., which may be further subdivided in a remote unit and a central unit.

A mobile transceiver may be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In other words, in embodiments the mobile communication system may correspond to a HetNet, which utilizes different cell types, i.e. Closed Subscriber Group (CSG) cells and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station transceivers for which their coverage areas are determined by their transmission power and interference condition. In some embodiments a small cell's coverage area can at least partly be surrounded by the coverage area of a macro cell established by another base station transceiver. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below a 100m. A femto cell may be the smallest cell and it may be used to cover a household or gate section at the airport, i.e. its coverage area may have a diameter below 50m. Thus, a base station transceiver may also be referred to as cell.

The first or the second identity information related to an identity of fixed machine device transceiver 100 may comprise an address information, e.g. a network address of the machine device. In exemplary embodiments, an address length or bit number of the address of fixed machine device transceiver 100 (abbreviated in the following as a machine device, MD, or simply device 100), is adapted according to a frequency of transmissions of said device 100. A device with comparatively frequent transmissions may receive a short address from mobile communication system 300 (henceforth also denoted as network 300), whereas another device with comparatively rare transmissions receives a longer address.

According to a further embodiment, control module 14 is operable to send a previously received signal from the fixed machine device transceiver 200 comprising the first or the second identity information to a traffic analysis entity 150. That is to say, a network entity or traffic analysis entity 150 is applied, which is operable to measure the frequency of transmissions from all observed devices and to calculate an improved or optimal address length for each device based on long-term statistics. The calculation of an improved address length may e.g. depend on a number of devices observed, an observation time span and a number of transmissions per device or in total. The specification of the radio system thereby allows an adaptation of the length of addresses. Thus, the mean number of bits to be spent for addressing may be reduced or even minimized.

In some embodiments control module 14 is further operable to determine the number of bits representing the first or the second identity information based on a transmission probability of fixed machine device transceiver 200. Determining said number of bits may be done locally or using traffic analysis entity 150. In some further embodiments control module 14 is further operable to determine the number of bits representing the first or the second identity information inversely proportional to the transmission probability of fixed machine device transceiver 200. In other words, an entropy coding method may be performed. Entropy coding is a lossless data compression scheme, which assigns a unique prefix-free code to each unique symbol that occurs in an input. A known method that may reduce or even minimize the code-word length of symbols from an information source is Huffman coding. Therein, a code word length which corresponds to a bit number of a symbol depends on the transmission probability of the symbol. The lower the probability of a symbol is the longer is the code word. The first or the second identity information may comprise a single symbol or a multitude of symbols.

The code word length of a symbol and hence the bit number of the first or the second identity information may be adapted dynamically if a change in transmission probability takes place. In other words, in some embodiments control module 14 is operable to determine the first or the second identity information for fixed machine device transceiver 200 if a change in transmission probability of fixed machine device transceiver 200 over a predefined time interval exceeds a predetermined threshold. The time interval may for example be one minute, 15 minutes, one hour, twelve hours or one day. The transmission probability may resemble a relative value, and may be a number greater equal than zero and lesser equal than unity. Determining of the first or the second identity information may for example be triggered if transmission probability changes by at least 0.01, 0.05 or 0.1. The latter exemplary values may further depend on a total number of possible symbols or addresses comprising symbols. Determining of the first or the second identity information may also be performed in periodic time intervals, e.g. one hour, one day.

Huffman coding may reduce or even minimize the mean code word length of the information source (which may be an address comprised by an identity information). In a continuous sequence of code words, it is possible to detect the border between two code words, if an arbitrary code word is not equal to the beginning of any other code word of any other symbol of the information source, or equivalently, the code words are prefix-free. As an example, if the three symbols 'A', 'B' and 'C' are mapped to the respective prefix-free code words '0', '10' and '11', each sequence consisting of these code words, may be distinctly decoded (e.g. 010101100010 representing ABBCAAAB). In an embodiment the principle of Huffman coding is applied for the calculation of an improved or even optimal address length. Thus, by reducing the bit number of the address information preceding a transmission, a total data overhead may be reduced. This may be helpful to improve a signal-to-noise ratio of transmissions and possibly to save energy.

It shall be understood that in the following superordinate reference numerals may be used. For example, reference numeral 200 is superordinate to reference numerals 200-1; 200-2; 200-3; 200-4...; 200-n. In other words, a mentioning of machine device 200 may refer to any of a group of machine devices 200-1 to 200-n.

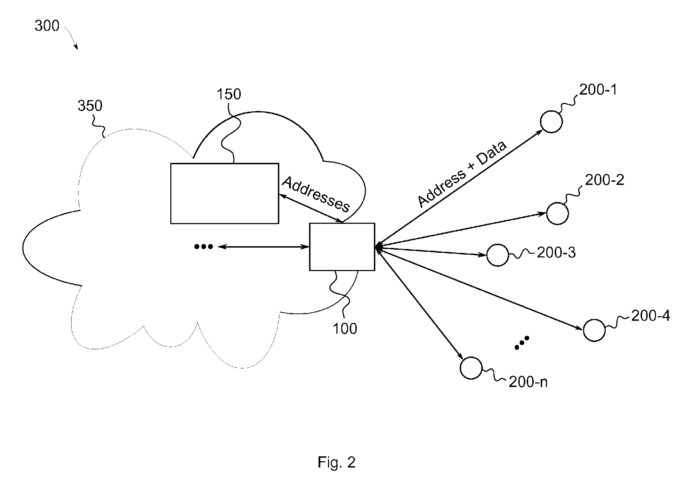

Turning now to Fig. 2, it is shown an embodiment of a network architecture that may be used to apply the proposed solution. Network 300 comprises a number n of machine devices 200-1; 200-2; 200-3; 200-4...; 200-n, wherein a transmission probability $P_1$ is true for machine device 200-1, transmission probability $P_2$ for machine device 200-2, etc. Transmissions comprise an address part, which represents the identity information of a given machine device 200-1 to 200-n, a data part, and optional control information, and occur between the machine devices 200-1 to 200-n and a base station 100 representing base station transceiver 100. In other words, devices 200-1 to 200-n communicate with a radio access- and a core network 350 comprising at least base station 100 and optionally a number of further base stations.

In an embodiment, the mentioned address is a local and temporary prefix-free address of variable length used for the communication between device 200-1 to 200-n and core network 350. Base station 100, and maybe other entities in the radio access and core network 350 may have knowledge about a mapping between device ID and address, e.g. through a look-up table. The address of a device 200 may be adjusted to a total number of devices 200 within a range of a base station 100. The ID may be an additional identity information assigned to a device 200, and may for example be a cell radio network temporary identity (CRNTI). In other words, one given address is biunique for one given machine device 200-1 to 200-n in some embodiments. A biunique assignment, also called a bijection, is a function between the elements of two sets, where every element of one set is paired with exactly one element of the other set, and every element of the other set is paired with exactly one element of the first set.

Addresses comprised by any incoming or outgoing message to and from base station 100 are transmitted to traffic analysis entity 150. Hence traffic analysis entity 150 in Fig. 2 may be aware of the addresses of all transmitted messages. An interface between a machine manager and network 300 may be established for such analysis. Additionally, traffic analysis entity 150 may be operable to determine the mentioned probabilities $P_n$, e.g. through long-term traffic observations. Furthermore, traffic analysis entity 150 may be operable to determine prefix-free addresses for devices 200-1 to 200-n based on $P_n$, following the aforementioned principles of Huffman coding, or any alternative coding scheme capable of reducing or even minimizing a mean address length or a number of bits spent for addressing, respectively. In doing so, the addresses of the devices 200-1 to 200-n, or more specifically the length of the addresses, may be improved or optimized from time to time based on most recent traffic statistics.

In the following exemplary embodiments the first identity information corresponds to an address being currently in use for a given machine device, and the second identity information corresponds to an address being newly determined for said machine device, based on exemplary coding schemes. In other embodiments however, addresses may be newly determined repeatedly, and the first identity information may correspond to an address that has previously been determined for a given machine device by one of the described exemplary methods.

In some embodiments control module 14 is operable to determine the first or the second identity information for fixed machine device transceiver 200 (which in Fig. 2 is represented by machine device 200-1 to 200-n) in response to an update signal from a traffic analysis entity 150. If new addresses for devices 200-1 to 200-n were determined, the above mentioned mapping table between device IDs and prefix-free addresses may be updated. traffic analysis entity 150 may be either a new physical entity in network 300, or an additional feature of any existing network entity, for example an additional module comprised by base station 100.

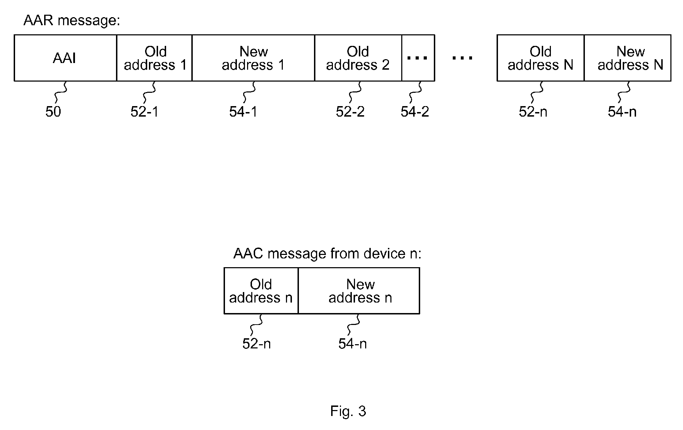

In some further embodiments control module 14 is operable to send an adaptation request signal to the fixed machine device using transceiver module 12, the adaptation request signal comprising the first and the second identity information for machine device 200. Core network 350 or base station 100 may in other words send an Address Adaptation Request (AAR) message to all devices 200-1 to 200-n. This message comprises three parts illustrated in Fig. 3. A first part is an Address Adaptation Identifier (AAI) 50 indicating that an address change is initiated. A second part is a number of old prefix-free addresses 52-1 to 52-n for devices 200-1 to 200-n, respectively, or an identification code (ID) for the MDs 200-1 to 200-n. A third part is a number of new prefix-free addresses 54-1 to 54-n for devices 200-1 to 200-n, respectively. The old addresses and the new addresses or the first or the second identity information therein may be biunique for devices 200-1 to 200-n.

The AAR message may be sent on a broadcast channel. In an embodiment, a "marker" is defined in the beginning of an address. It may thus be possible for the MDs 200-1 to 200-n to identify where their address is. Said markers may be the information regarding the length of the addresses or some physical modification in the signal, such as a predefined phase rotation. Alternatively, AAI, old address or ID, and new address can also be sent in individual channels to the devices, for example in a multicast or unicast channel.

In some embodiments control module 14 is operable to determine the first or the second identity information such that an intersection set of a first identity information set comprising the first identity information and a second identity information set comprising the second identity information is a null set. In other words, from a set comprising a number of old addresses and a number of newly determined addresses, no two or more addresses are identical. This may help to avoid ambiguities in a further traffic analysis.

In further embodiments control module 24 comprised by machine device 200 is operable to activate the second identity information if said adaptation request signal from base station 100 comprising the first and the second identity information for machine device 200 is received by transceiver module 22 (also compare Fig. 1). In even further embodiments control module 24 is operable to send a confirmation signal to the base station 100 using transceiver module 22, if an adaptation request signal from base station 100 comprising the first and the second identity information for machine device 200 is received by transceiver module 22. In other words, devices 200-1 to 200-n may respond with an individual Address Adaptation Confirmation (AAC) message (see Fig. 3) comprising two parts. A first part comprises the old prefix-free address 52-n of a given device 200-n or its ID. A second part comprises the old prefix free address 54-n of said device 200-n. This may be helpful to control whether or not the AAR message has been received by a given device 200.

In some embodiments control module 14 comprised by base station 100 is operable to send the adaptation request signal repeatedly using transceiver module 12 if no confirmation signal from machine device 200 is received within a predefined time period. That is to say, in case base station 100 did not receive the AAC from all addressed devices within a given time, a retransmission of the AAR may be done. The retransmission may comprise only the old and new addresses of those devices 200 that did not respond with an AAC message. In some further embodiments control module 14 is operable to send a validity signal to the fixed machine device using transceiver module 12, if a confirmation signal from machine device 200 is received within a predefined time span. Or, in other words, once base station 100 received AAC messages from all previously addressed devices 200, it may send an Address Adaptation Finalization (AAF) message to said devices 200, for example on a broadcast channel. This message may indicate that the new addresses are now valid and will be utilized for any further communication with device 200.

In another embodiment an AAF message is sent after a preset time interval, regardless of AAC messages received by base station 100. For instance, the time interval may be associated with a hyper frame number (HFN), or the AAR message may comprise a further part comprising information about a time-dependent trigger for a validation of new addresses. An exemplary trigger may e.g. be an imminent rollover or a specified HFN. In this case a missing AAC message from a given device 200 may indicate a malfunctioning of said device 200.

In an embodiment control module 24 is operable to communicate with base station 100 using the second identity information if a validity signal from base station 100 is received by transceiver module 22 or if a predefined time limit is exceeded. It may thus become possible to implement several possible triggers for a validation of the new addresses. It is to be noted here that an "activation" of a new address may imply that a base station or a machine device is informed that an address update is imminent or recognizes incoming messages comprising the new address, but may still use or recognize an old address for communication. On the other hand, "validity" or "validation" of the new address may imply that old addresses are no longer used in any incoming or outgoing messages. Moreover it is possible in an embodiment to implement a delay time between determining of a new address and activation or validation of said new address.

In case that not the addresses of all N observed devices, but only those of a subset $N_x$ shall be changed, the remaining $N_y$ ($N_y$ = N - $N_x$) unchanged addresses may not be part of the AAR message. In consequence, an answer with an AAC message from the $N_y$ devices without address adaptation may be omitted. In consequence it may be possible to reduce data overhead even further.

An effect of savings in an average amount of overhead transmitted by an identification in a cell may be illustrated with the following equation:

$$E\{L\} = \sum_{n=1}^{N} (P_n \times L_n)$$

where $E\{L\}$ is the average length of the prefix-free address transmitted at the access channel per transmission event and $L_n$ is the length of the prefix-free address of device n. For small probabilities $L_n$ may be comparatively large, while for big probabilities $L_n$ may be short. In this way, all the products in the sum may be reduced and the overall overhead may be reduced

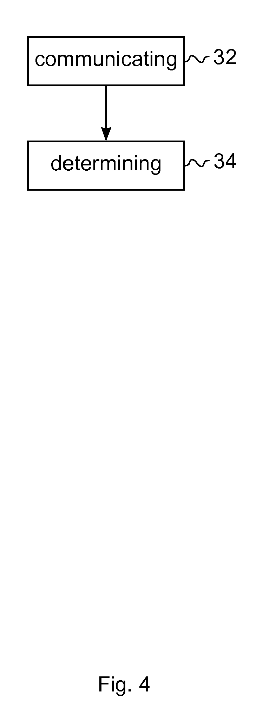

Turning now to Fig. 4, it is shown a flow chart of a method for a base station transceiver of a mobile communication system. The method comprises communicating 32 with a stationary fixed machine device transceiver using a first or a second identity information related to an identity of the fixed machine device transceiver. A number of bits representing the first identity information differs from a number of bits representing the second identity information. The method further comprises determining 34 the first or the second identity information for the fixed machine device transceiver such that for a given point in time either the first or the second identity information is valid.

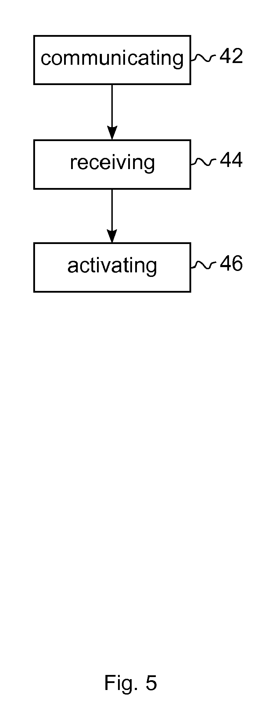

Fig. 5 further shows a flow chart of a method for a fixed machine device transceiver of a mobile communication system. The method comprises communicating 42 with a base station transceiver using a first or a second identity information related to an identity of the fixed machine device transceiver. A number of bits representing the first identity information differs from a number of bits representing the second identity information. The method further comprises receiving 44 the first or the second identity information from the base station transceiver. Moreover, the method comprises activating 46 either the first or the second identity information at a given point in time.

The methods presented in Fig. 3 and 4 may reduce or even minimize the overhead for addresses. This may be of particular interest in a communication system with the transmission of a multitude of short messages from a big number of devices. In a communication system with this characteristic, the amount of bits to be spent for addressing may be significant, which may pose a non-negligible factor in the system design.

Embodiments may enable a reduction or minimization of the mean address length. Compared to a conventional solution less bits may be spent for addressing. In consequence, with embodiments a bigger number of devices may be supported with the same amount of radio resources.

A further embodiment is a computer readable storage medium storing instructions which, when executed by a computer, cause the computer to implement one of the methods described herein. Other embodiments are a computer program or a computer program product having a program code for performing any one of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks labeled as "means", "means for transceiving", "means for storing", "means for processing", "means for controlling", etc., may be provided through the use of dedicated hardware, such as "a transceiver", "a memory/storage", "a processor", "a controller", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. An apparatus (10) for a base station transceiver (100) of a mobile communication system (300), comprising

a transceiver module (12) operable to communicate with a stationary fixed machine device transceiver (200) using a first or a second identity information related to an identity of the fixed machine device transceiver (200), wherein a number of bits representing the first identity information differs from a number of bits representing the second identity information; and
a control module (14) operable to
control the transceiver module (12), and
determine the first or the second identity information for the fixed machine device transceiver (200) such that for a given point in time either the first or the second identity information is valid.

2. The apparatus (10) according to claim 1, wherein the control module (14) is further operable to determine the number of bits representing the first or the second identity information based on a transmission probability of the fixed machine device transceiver (200) and/or wherein the control module (14) is further operable to determine the number of bits representing the first or the second identity information inversely proportional to the transmission probability of the fixed machine device transceiver (200).

3. The apparatus (10) according to claim 1, wherein the control module (14) is operable to determine the first or the second identity information for the fixed machine device transceiver (200) if a change in transmission probability of the fixed machine device transceiver (200) over a predefined time interval exceeds a predetermined threshold.

4. The apparatus (10) according to claim 1, wherein the control module (14) is operable to send a previously received signal from the fixed machine device transceiver (200) comprising the first or the second identity information to a traffic analysis entity (150).

5. The apparatus (10) according to claim 1, wherein the control module (14) is operable to determine the first or the second identity information for the fixed machine device transceiver (200) in response to an update signal from a traffic analysis entity (150).

6. The apparatus (10) according to claim 1, wherein the control module (14) is operable to determine the first or the second identity information such that an intersection set of a first identity information set comprising the first identity information and a second identity information set comprising the second identity information is a null set.

7. The apparatus (10) according to claim 1, wherein the control module (14) is operable to send an adaptation request signal to the fixed machine device using the transceiver module (12), the adaptation request signal comprising the first and the second identity information for the fixed machine device transceiver (200), and/or to send the adaptation request signal repeatedly using the transceiver module (12) if no confirmation signal from the fixed machine device transceiver (200) is received within a predefined time period.

8. The apparatus (10) according to claim 1, wherein the control module (14) is operable to send a validity signal to the fixed machine device using transceiver module (12), if a confirmation signal from the fixed machine device transceiver (200) is received within a predefined time span.

9. An apparatus (20) for a fixed machine device transceiver (200) of a mobile communication system (300), comprising
a transceiver module (22) operable to communicate with a base station transceiver (100) using a first or a second identity information related to an identity of the fixed machine device transceiver (200), wherein a number of bits representing the first identity information differs from a number of bits representing the second identity information; and
a control module (24) operable to
control the transceiver module (22);
receive the first or the second identity information from the base station transceiver (100); and
activate either the first or the second identity information at a given point in time.

10. The apparatus (20) according to claim 9, wherein the control module (24) is operable to activate the second identity information if an adaptation request signal from the base station transceiver (100) comprising the first and the second identity information for the fixed machine device transceiver (200) is received by the transceiver module (22), and/or wherein the first or the second identity information is biunique.

11. The apparatus (20) according to claim 9, wherein the control module (24) is operable to send a confirmation signal to the base station transceiver (100) using the transceiver module (22), if an adaptation request signal from the base station transceiver (100) comprising the first and the second identity information for the fixed machine device transceiver (200) is received by the transceiver module (22).

12. The apparatus (20) according to claim 9, wherein the control module (24) is operable to communicate with a base station transceiver (100) using the second identity information if a validity signal from the base station transceiver (100) is received by the transceiver module (22) or if a predefined time limit is exceeded.

13. A method for a base station transceiver (100) of a mobile communication system (300), said method comprising: communicating (32) with a stationary fixed machine device transceiver (200) using a first or a second identity information related to an identity of the fixed machine device transceiver (200), wherein a number of bits representing the first identity information differs from a number of bits representing the second identity information;
determining (34) the first or the second identity information for the fixed machine device transceiver (200) such that for a given point in time either the first or the second identity information is valid.

14. A method for a fixed machine device transceiver (200) of a mobile communication system (300), said method comprising:

communicating (42) with a base station transceiver (100) using a first or a second identity information related to an identity of the fixed machine device transceiver (200), wherein a number of bits representing the first identity information differs from a number of bits representing the second identity information;
receiving (44) the first or the second identity information from the base station transceiver (100); and
activating (46) either the first or the second identity information at a given point in time.

15. A computer program having a program code for performing the method of one of claims 13 or 14, when the computer program is executed on a computer, processor, or a programmable hardware component.

Fig. 1

Fig. 2

AAR message:

| AAI | Old address 1 | New address 1 | Old address 2 | ... | ... | Old address N | New address N |
|-----|---------------|---------------|---------------|-----|-----|---------------|---------------|
| 50 | 52-1 | 54-1 | 52-2 | 54-2 | | 52-n | 54-n |

AAC message from device n:

| Old address n | New address n |
|---------------|---------------|
| 52-n | 54-n |

Fig. 3

communicating ~ 32

determining ~ 34

Fig. 4

| communicating | ~ 42 |

| receiving | ~ 44 |

| activating | ~ 46 |

Fig. 5

Europäisches
Patentamt

European
Patent Office

Office européen
des brevets

**EUROPEAN SEARCH REPORT**

Application Number

EP 14 30 5792

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2008/139203 A1 (NG DENNIS [US] ET AL) 12 June 2008 (2008-06-12) <br> * abstract * <br> * paragraphs [0001] - [0022]; figure 1 * | 1-8,13, 15 | INV. <br> H04W4/00 |
| A | LIN Y-T ET AL: "Addressing for M2M Devices and Corresponding Masking Schemes of A-A-MAP IEs", <br> IEEE C80216P-11/0028R2, <br> , <br> 14 March 2011 (2011-03-14), pages 1-9, XP002690788, <br> Retrieved from the Internet: <br> URL:http://www.ieee802.org/16/m2m/contrib/C80216p-11_0028r2.doc <br> [retrieved on 2013-01-22] <br> * Item 16.2.1 Addressing * | 1-8,13, 15 | |
| X | EP 2 464 153 A1 (ST ERICSSON SA [CH]) 13 June 2012 (2012-06-13) <br> * abstract * <br> * paragraphs [0001] - [0040] * | 9-12,14, 15 | |
| | | | TECHNICAL FIELDS SEARCHED (IPC) |
| A | US 2012/079086 A1 (MIETTINEN MARKUS JUHANI [FI]) 29 March 2012 (2012-03-29) <br> * abstract * | 9-12,14, 15 | H04W |

The present search report has been drawn up for all claims

| Place of search | Date of completion of the search | Examiner |
|---|---|---|
| Munich | 18 March 2015 | Hackl, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

Europäisches
Patentamt

European
Patent Office

Office européen
des brevets

**Application Number**

EP 14 30 5792

---

**CLAIMS INCURRING FEES**

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

**LACK OF UNITY OF INVENTION**

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

| | LACK OF UNITY OF INVENTION | Application Number |
|---|---|---|
| Europäisches Patentamt European Patent Office Office européen des brevets | **SHEET B** | EP 14 30 5792 |

The Search Division considers that the present European patent application does not comply with the requirements of unity of invention and relates to several inventions or groups of inventions, namely:

1. claims: 1-8, 13(completely); 15(partially)

A method for a base station transceiver (100) of a mobile communication system (300), said method comprising: communicating (32) with a stationary fixed machine device transceiver (200) using a first or a second identity information related to an identity of the fixed machine device transceiver (200), wherein a number of bits representing the first identity information differs from a number of bits representing the second identity information;determining (34) the first or the second identity information for the fixed machine device transceiver (200) such that for a given point in time either the first or the second identity information is valid.

---

2. claims: 9-12, 14(completely); 15(partially)

A method for a fixed machine device transceiver (200) of a mobile communication system (300), said method comprising: communicating (42) with a base station transceiver (100) using a first or a second identity information related to an identity of the fixed machine device transceiver (200), wherein a number of bits representing the first identity information differs from a number of bits representing the second identity information;receiving (44) the first or the second identity information from the base station transceiver (100); and activating (46) either the first or the second identity information at a given point in time.

---

**ANNEX TO THE EUROPEAN SEARCH REPORT**
**ON EUROPEAN PATENT APPLICATION NO.**                    EP 14 30 5792

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2015

| Patent document cited in search report | | Publication date | Patent family member(s) | | Publication date |
|---|---|---|---|---|---|
| US 2008139203 | A1 | 12-06-2008 | NONE | | |
| EP 2464153 | A1 | 13-06-2012 | CN | 103348714 A | 09-10-2013 |
| | | | EP | 2464153 A1 | 13-06-2012 |
| | | | US | 2014038601 A1 | 06-02-2014 |
| | | | WO | 2012076181 A1 | 14-06-2012 |
| US 2012079086 | A1 | 29-03-2012 | NONE | | |

EPO FORM P0459

For more details about this annex : see Official Journal of the European Patent Office, No. 12/82